# EUROPEAN PATENT SPECIFICATION

(11) **EP 0 350 795 B1**
(45) Date of publication and mention of the grant of the patent: **26.01.1994**
(21) Application number: 89112390.3
(22) Date of filing: 06.07.1989
(51) Int. Cl.: F02M 21/06

(54) **Gas engine including fuel supply system**
Gasbrennkraftmaschine und Brennstoffzufuhrsystem
Moteur à gaz et système d'alimentation en carburant

(30) Priority: 09.07.1988 JP 171292/88
(43) Date of publication of application: 17.01.1990
(73) Proprietor: YAMAHA HATSUDOKI KABUSHIKI KAISHA, Iwata-shi Shizuoka-ken, 438 (JP)
(72) Inventor: Yokoyama, Yoshiharu, Iwata-shi Shizuoka-ken (JP)
(74) Representative: Grünecker, Kinkeldey, Stockmair & Schwanhäusser Anwaltssozietät

(56) References cited:
- DE-A- 3 119 211
- FR-A- 811 848
- FR-A- 1 257 015
- FR-A- 1 382 225
- FR-A- 1 443 341
- FR-A- 2 192 269
- FR-A- 2 354 507
- FR-E- 85 436
- GB-A- 2 006 546
- JP-A-62 143 056
- US-A- 2 908 143
- US-A- 3 306 273
- US-A- 4 098 079
- PATENT ABSTRACTS OF JAPAN, vol. 11, no. 196 (M-601) (2643), June 24, 1987; & JP-A-62 20 668
- PATENT ABSTRACTS OF JAPAN, vol. 9, no. 206 (M-406)(1929), August 23,1985; & JP-A-60 65 996
- PATENT ABSTRACTS OF JAPAN, vol.11 , no. 28 (M-557)(2475), January 27, 1987 & JP-A-61 200 361
- PATENT ABSTRACTS OF JAPAN, vol. 7, no.240 (M-251)(1385), October 25, 1983; & JP-A-58 126 456
- PATENT ABSTRACTS OF JAPAN, vol. 8, no. 104 (M-296)(1541),May 16, 1984; & JP-A- 59 15 633
- PATENT ABSTRACTS OF JAPAN; vol.13, no. 36 (M-790)(3384), January 26, 1989; & JP-A-63 246 459
- PATENT ABSTRACTS OF JAPAN, vol. 6, no. 50 (M-120)(928) April 3, 1982; & JP-A-56 165 755

## Description

This invention relates to a gas engine with a fuel supply system associated thereto including a gas container, such as a gas bomb, filled with pressurised gas to be supplied to the engine, probably via a gas pressure regulator in order to be combusted in the engine.

A gas engine as mentioned above is well known in the art incorporating a gas container such as a bomb for containing LPG (liquefied propane gas) with the pressurised gas supplied from said bomb being conveyed to the engine through a pressure regulator combusting the gas in the engine. Such a kind of an engine implies problems in that, due to a large amount of evaporation and heat being robbed when the gas flows out of the gas container and the remaining gas in the container expands, the temperature of the gas container drops causing insufficient fuel evaporation and thus preventing smooth gas supply.

Accordingly, it has been suggested to detect the temperature of the gas container or the pressure regulator and to heat the gas container when that temperature is lower than a preset temperature (e.g. Japanese Provisional Utility Model Publications S62-143056, S62-150570, etc). However, such measures are easily affected by changes of the environment such as the atmospheric temperature and have only poor responsiveness.

FR-A-811 848 discloses a gas engine which comprises a fuel supply system, the gas container thereof is isolated adjacent ambient atmosphere
A gas engine as indicated in the preamble portion of claim 1 is shown from JP-U-62 14 30 56 wherein the gas engine is equipped with a fuel supply system which is purely temperature-responsive.

Accordingly it is an object of the present invention to provide an improved gas engine including a more reliable fuel supply system with the latter being capable of supplying the gaseous fuel to the engine satisfactorily without being affected by changes of the environmental conditions such as atmospheric pressure and/or ambient temperature, performing improved response characteristics to changes of the fuel supplying state. Moreover, the invention aims at improving the cold start performance of such a gas engine under cold climate conditions.

According to the present invention, the afore-indicated objective is performed through a gas pressure detecting means is provided for detecting the gas pressure in said gas container to activate a container heating means in response to the gas pressure being detected as lower than a predetermined value, said gas pressure detecting means comprises a diaphragm pressure sensor defining a gas pressure chamber and an atmospheric pressure chamber, said gas pressure chamber subject to the gas pressure of the gas container by a conduit communicating said gas pressure chamber to a receptacle forming a gas expansion chamber disposed downstream of a mouthpiece of the gas container whereas said diaphragm pressure sensor supports a switch actuating means to operate said container heating means in response to a deflection of the diaphragm reflecting an internal pressure drop in the gas container.

Advantageously, said gas pressure adjusting means is formed by a heating means for heating the gas container and is located in closely spaced apart relationship to said gas container.

Preferably, said pressure detecting means is designed to be a fluid operated pressure sensor comprising a housing partitioned by a spring biased diaphragm to separate a gas chamber, subject to gas pressure applied from the gas container, from an atmospheric pressure chamber which contains a coil spring to bias said diaphragm against said gas pressure, said diaphragm supporting a switch actuating means adapted to operate said heating means in response to a pressure drop of the gas pressure inside the gas container to or below a predetermined limiting value.

In compliance with a preferred embodiment of the present invention enabling the gas pressure inside the gas container to be sensed precisely and without delay, said pressure detecting means is arranged in parallel to the gas pressure regulator with a fluid line communicating said gas chamber of the pressure detecting sensor with a receptacle into which the liquefied pressurised gas expands upon leaving the gas container.

Preferably, said heating means associated to the gas container and excited in response to an output of the gas pressure detecting means is an electrical tubular or plate heater, in particular an electrical cartridge heater, formed into an arc-shaped cross-section to cover at least the lower half of the gas container. Reflecting an advantageous assembly of the heating means, said arc-shaped electrical heater is adapted to cover the lower half of the gas container leaving a gap in between. A medium provided to fill up the space can then be selected in order to control heat dissipation from the heater to the gas container in compliance with a predetermined pattern. Preferably, said gap should be filled with a heat conductive material having a low thermal resistance in order to provide superior heat transfer from the heater to the gas container. Moreover, said heating means could be designed to be effective in supporting said gas container.

According to the afore-indicated design strategies, said heater means is electrically operated activated by the electric current supplied from an energy source such as a battery electrically connectable with the heater means through a switch means operated by the diaphragm through a switch actuating means of said gas pressure detecting means.

Preferably, said switch actuating means comprises a stem engaging a contact lever adapted to close the electric circuit containing said heater.

According to another advantageous embodiment of the present invention, said heating means is activated by a continuously controlled electric current supplied from an energy source, such as a heater source circuit, supplying said heater current, the phase of which is controlled by a heater control circuit through a phase control circuit. Preferably, said phase control circuit implies a thyristor, with said heater control circuit receiving an input from a continuously adjustable resistor adjusted in response to the deflection of the diaphragm which, in turn, reflects the gas pressure of the gas container.

As such a gas engine normally includes a starter motor, said heater current could also be supplied from such a starter motor operated as a generator driven by the engine during ordinary gas engine running.

The provision of an additional heating means for the gas container, however, is not restricted to heaters excited by an electric current. According to another layout of the gas engine which could be chosen alternatively, said heating means comprises a warm air manifold, especially a shroud, utilising the latent heat of the gas engine to warm up the surrounding air, the flow of heated air towards the gas container being controlled by a baffle means pivotably supported at said manifold to control an outlet thereof in response to the gas pressure of the gas container as detected by the diaphragm linked with said baffle or valve flap via linkage means.

The performance of the afore-indicated hot-air heater can be considerably improved by an air circulating means such as a fan attached to the crankshaft of the gas engine, forcibly directing warmed air from the ambience of the engine through the shroud towards the baffle means which, in turn, leads to the gas container.

Further, preferred embodiments of the present invention are laid down in the other subclaims.

The present invention will be explained in further detail through the following explanation of preferred embodiments of the invention when taken in conjunction with the accompanying drawings in which:
Fig 1 is a conceptual illustration of a first embodiment of the invention,
Fig 2 is a cross-sectional view along the line II-II of Fig 1,
Fig 3 is a system diagram of an engine generator incorporated with said embodiment,
Fig 4 is an arrangement plan for the components of Fig 3,
Figs 5 and 6 are conceptual illustrations of second and third embodiments of the present invention.

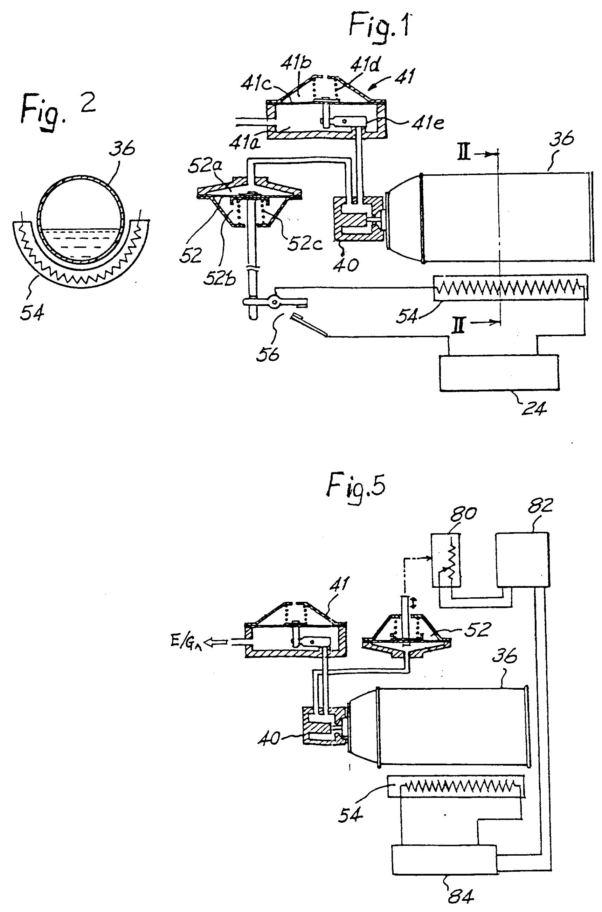

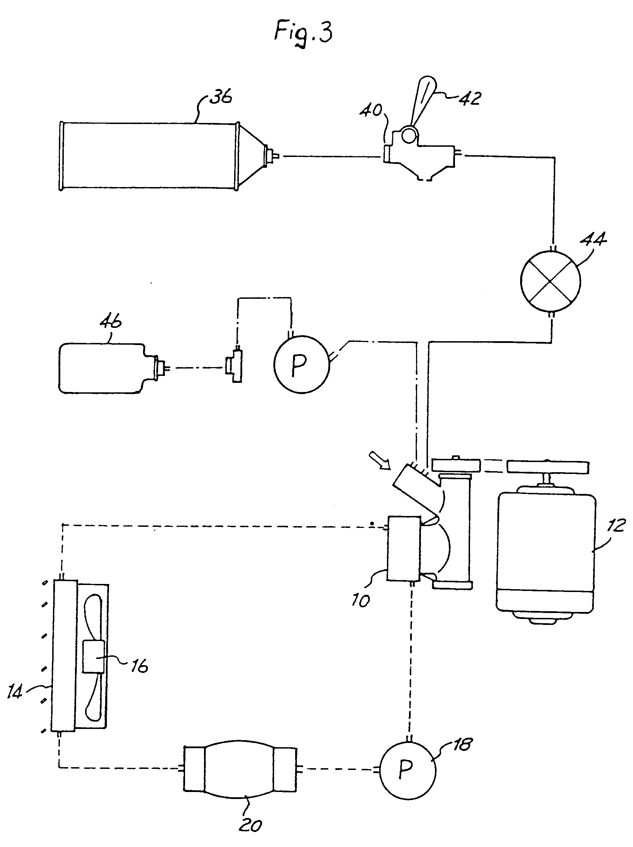

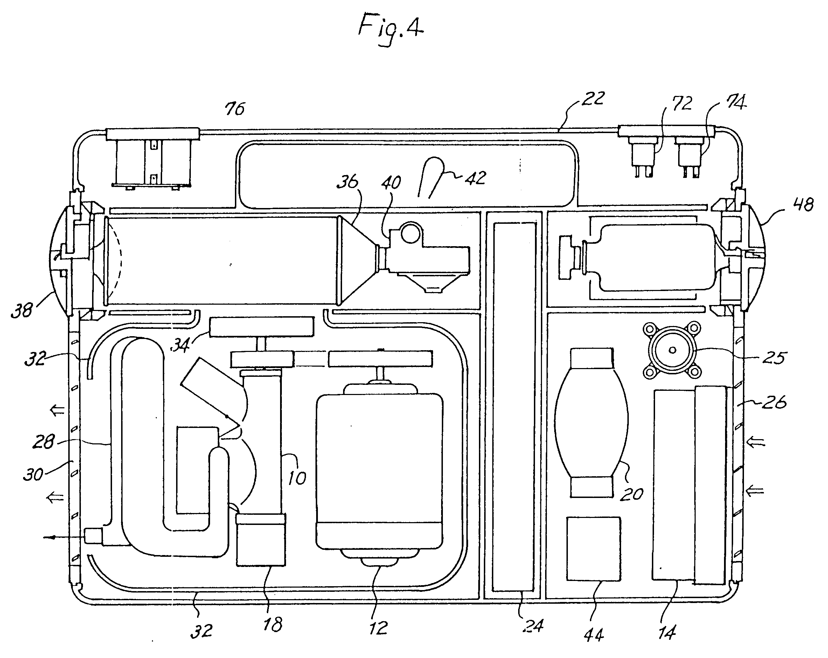

In Figs 3 and 4 the general layout and arrangement of a gas engine with fuel supply system related thereto according to the present invention is shown with some details, as selectively shown in Figs 1, 2, 5 and 6, being omitted.

In Figs 3 and 4, the reference numbers 10 and 12 denote a liquid-cooled 2-cycle engine and a combination generator-starter, respectively, and both are coupled with each other through a belt system or the like. That is, when starting the engine 10, the generator 12 drives the engine as a starter motor and, after the engine is started, the generator 12 is driven by the engine 10 to generate electricity. Reference numeral 14 denotes a radiator integrated with the electric fan 16; reference numeral 18 denotes a water pump driven by engine 10; reference numeral 20 denotes a coolant pressure regulator, and the coolant circulates through a hermetically sealed passage comprising a cylinder and a cylinder head of the engine 10, coolant pump 18, coolant pressure regulator 20 and radiator 14. The coolant pressure regulator 20 comprises a variable-volume vessel made of an elastic material such as rubber to absorb volumetric change of the coolant caused by its temperature change.

Reference numeral 22 in Fig 4 designates a box-shaped case in which are arranged the radiator 14 on the right of the vertically disposed battery 24, an electromagnetic valve 44, the coolant pressure regulator 20, and an electromotive lubricating oil pump 25, and the radiator 14 inhales the outside air into the case 22 through an opening 26 on the right side of the case 22. The engine 10 and the generator 12 are disposed on the left of the battery 24. The exhaust gas of the engine 10 is exhausted out of the muffler 28 near the left side of the case 22 through an opening 30 of the case 22. The engine 10, generator 12 and the muffler 28 are surrounded by an air guide wall 32, and the air inhaled by the fan 16 of the radiator 14 into the case 22 is guided by this air guide wall 32 and is exhausted through the opening 30 after passing around the generator 12, engine 10 and muffler 28.

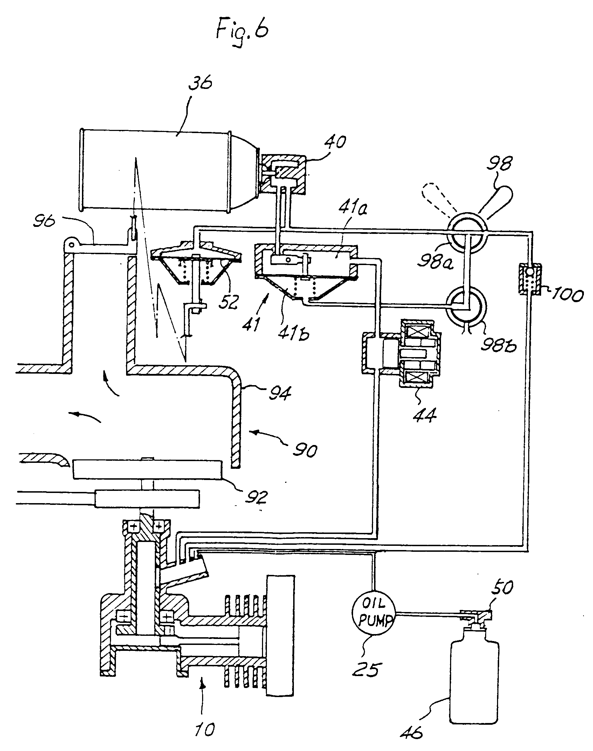

In Fig 4, a fan 34 is shown affixed to the engines crankshaft. Said fan 34 is selectively designed either to assist air to be introduced into the space surrounded by the air guide wall 32, or to provide a heating structure for the gas container similar to those shown in Fig 6 utilising said air guide wall 32 to form a shroud, the outlet of which is controlled in response to the internal gas pressure of the gas container 36. Such a control means for heating up the gas container 35 depending on its internal gas pressure detected, however, is not shown in Fig 4 disclosing an arrangement rather utilising an electrical heating means for the gas container 36 as exemplified with respect to Figs 1, 2 or 5 (not shown in Fig 4 either) explained in details as the description proceeds.

Reference numeral 36 denotes a gas bomb (gas container) and contains liquefied butane gas or liquefied propane gas. This bomb 36 is loaded after opening the cap 38 positioned on the left side of the case 22. When loaded, the tip of the bomb 36 is connected to the receptacle 40. This receptacle 40 is incorporated with a gas pressure regulator 41 and a fuel cock 42, and the fuel after passing through this receptacle 40 is supplied into the intake pipe of the engine 10 through an electromagnetic valve 44 (Fig 3).

Reference numeral 46 denotes a cartridge type lubricating oil tank which is loaded after opening a cap 48 positioned on the right side of the case 22. When this tank 46 is loaded, its tip is connected to another receptacle 50. The lubricating oil is supplied from this other receptacle 50 into the intake pipe of the engine 10 through the oil pump 25.

Now the fuel supplying system according to this invention is described. The receptacle 40 for the bomb 36 and the gas pressure regulator 41 are connected as shown in the conceptual illustration of Fig 1. That is, the gas pressure regulator 41 comprises a gas chamber 41a, an atmospheric chamber 41b, a diaphragm 41c partitioning both chambers 41a and 41b from each other, a spring 41d for urging the diaphragm 41c partitioning both chambers 41a and 41b from each other, a spring 41d for urging the diaphragm 41c toward the gas chamber 41a and a control lever 41e for limiting gas inflow from the bomb 36 in conjunction with the diaphragm 41c. The gas of bomb 36, with its pressure controlled slightly (e.g. by 0.04kg/cm²) higher than the atmospheric pressure at this gas chamber, is led to the above-mentioned electromagnetic valve 44 and further to the engine 10.

Reference numeral 52 denotes a diaphragm as a gas pressure detecting means partitioning the gas chamber 52a and the atmospheric chamber 52b from each other, and into the gas chamber 52a is introduced the gas pressure of the bomb 36 and in the atmospheric chamber is contained a spring 52c. Reference numeral 54 denotes an electric heater as a heating means and this heater 54 is formed into an arcular cross-section to cover the lower half of the bomb 36 (see Fig 2).

The heater 54 can be adapted to the shape of the gas container or bomb 36 leaving a gap in between both components. Said space could be filled up with a heat conductive material to control heat dissipation along the bomb 36, preferably the space could receive a highly heat conductive material in order to facilitate the heat transfer from the heater 54 to the gas bomb 36. Preferably, the heater 54 takes a platelike shape of arcuate cross-section but certain types of cartridge heaters could also be used. Moreover, the heater 54 could act as a supporting means of said gas container 36.

The movement of the diaphragm 52 actuates the switch 56 to energise or de-energise the heater 54. That is, when the pressure of the bomb 36 becomes lower than a preset pressure, the diaphragm 52 moves toward the gas chamber 52a and the switch 56 is closed. Therefore, an electric current from the battery 24 flows through the heater 54, and the bomb 36 is heated by the heater 54.

Accordingly, when a gas supplying pressure drop is caused by a bomb temperature drop due, for example, to operation in a low temperature environment, such a gas pressure drop is promptly detected by the diaphragm 52, the electric circuit including the battery 24, the heater 54 and a heater activating switch 56 is closed by means of closing the switch 56 pivoting the conduct lever through the switch actuating stem of the diaphragm 52, and an electric current begins to flow through the heater 54. Thus, the bomb 36 is heated and the gas pressure is raised making it possible to supply the gas always under a stable pressure.

Now, open the cock 42, depress the operating switch 72 on the top surface of the case 22 to connect the electric source, then depress the start switch 74, and the generator 12 drives the engine 10 as a starter motor. When the engine speed exceeds a preset value, the electromagenetic valve 44 is opened and the fuel gas is supplied to the engine 10. Also the oil pump 25 is started to supply lubricating oil into the intake pipe.

After the engine 10 is started and hence the starter switch 74 is released, the generator 12 ceases to function as a starter motor and begins to function as a generator as originally intended. The output terminals of the generator 12 are connected to the battery 24 in parallel, and its electric power is taken out through an output receptacle 76.

Fig 5 is a conceptual illustration for a second embodiment. In this embodiment, a variable resistor 80 is employed instead of the switch 56 of the first embodiment in Fig 1 to continuously control the current of the heater 54. That is, the moving amount of the diaphragm 52 as a pressure detecting means is detected by the variable resistor 80, and the heater control circuit 82 controls the phase of the heater current by a heater source circuit 84 through a phase control circuit employing, for example, a thyristor.

Further, Fig 6 is a conceptual illustration showing a third embodiment, the heating means 90 of which utilises the heat of the engine 10. That is, while a fan 92 is fastened on the crankshaft of the engine 10 to lead warm air around the engine 10 to the bomb 36 through a shroud 94, the shroud 94 is provided with a baffle 96 for controlling warm air flow toward the bomb 36, which baffle is opened or closed by the diaphragm 52 as a pressure detecting means. Accordingly, when the gas pressure of the bomb 36 becomes lower than a preset pressure, the diaphragm 52 opens the baffle 96 to lead warm air around the engine 10 to the bomb 36 to heat it.

This third embodiment is further provided with a switching lever 98 to improve the startability of engine 10 in a cold environment. That is, this switching lever 98 is coupled with two switching valves 98a and 98b and, when the switching lever 98 is at its "cold start" position shown in solid lines in Fig 6, while the gas pressure of the bomb 36 is supplied to the engine 10 through the valve 98a and a check valve 100, it is also supplied to the atmospheric chamber 41b of the gas pressure regulator 41 through the valves 98a and 98b. Therefore, the gas of the bomb 36 is directly, without passing through the regulator 41, supplied to the engine 10, which promotes gas vaporisation in the bomb 36 through the suction vacuum of the engine 10 and improves startability of the engine 10, despite the low gas pressure due to the low temperature of the bomb 36. By pivoting the lever 98 to the position shown in broken lines in Fig 6, the valve 98a stops supplying gas through it and the valve 98b opens the atmospheric chamber 41b to the atmosphere, thus the engine 10 continues running ordinarily.

Since the gas engine with a fuel supplying system according to the present invention detects the gas pressure of the gas container and is constructed so that the gas container may be heated when the detected gas pressure becomes lower than a preset pressure, heating of the gas container can be begun promptly without waiting for the temperature drop of the gas container. Therefore, it has good responsiveness. Further, since it does not detect the gas container temperature, this system can satisfactorily supply the gas fuel without being affected by changes of environment such as the atmospheric temperature.

## Claims

1. Gas engine comprising a fuel supply unit associated thereto including a gas container (36) filled with liquified pressurised gas evaporating upon discharging out of the gas container (36) in order to be supplied to the gas engine, (14) having a detecting means operatively connected with a gas pressure adjusting means (54) associated to said gas container (36), **characterized in that** a gas pressure detecting means (52) is provided for detecting the gas pressure in said gas container (36) to activate a container heating means (54,90) in response to the gas pressure being detected as lower than a predetermined value, said gas pressure detecting means comprises a diaphragm pressure sensor (52) defining a gas pressure chamber (52a) and an atmospheric pressure chamber (52b), said gas pressure chamber (52a) subject to the gas pressure of the gas container (36) by a conduit communicating said gas pressure chamber (52a) to a receptacle (40) forming a gas expansion chamber (40) disposed downstream of a mouthpiece of the gas container (36), whereas said diaphragm pressure sensor (52) supports a switch actuating means to operate said container heating means (54,90) in response to a deflection of the diaphragm (52) reflecting an internal pressure drop in the gas container (36).

2. Gas engine according to claim 1, **characterized in that** said diaphragm pressure sensor (52) is arranged in parallel to a gas pressure regulator (41) with a fluid line fluidly communicating a gas pressure chamber (52a) of said diaphragm chamber with the receptacle (40) into which the liquiefied pressurised gas expands upon leaving the gas container (36).

3. Gas engine as claimed in claims 1 or 2, **characterised in that** said heating means is an electrical tubular or plate heater (54) or electrical cartridge heater formed into an arc-shaped cross-section to cover the lower half of the gas container (36).

4. Gas engine as claimed in claim 3, **characterised in that** said arc-shaped electrical heater (54) covers the lower half of the gas container (36) leaving a gap in between.

5. Gas engine as claimed in claim 4, **characterised in that** said gap is filled with heat conductive material providing highly improved transfer of heat from the heater (54) to the gas container (36).

6. Gas engine as claimed in at least one of the preceding claims 1 to 5, **characterised in that** said heating means (54) is effective to support said gas container (36).

7. Gas engine as claimed in at least one of the preceding claims 1 to 6, **characterised in that** said heating means (54) is activatable by an electric current supplied from an energy source, such as a battery (24) connected with the heating means (54) via a switch means (56) operated by said diaphragm pressure sensor (52) through said switch actuating mechanism of the diaphragm pressure sensor (52).

8. Gas engine as claimed in claim 7, **characterised in that** said switch actuating means comprises a stem engaging a pivotable contact lever adapted to close an electric circuit containing said electric heater (54).

9. Gas engine as claimed in at least one of claims 1 to 6, **characterised in that** said heating means (54) is activated by a continuously controlled electric current supplied from an energy source such as a heater source circuit (84) supplying said heater current, the phase of which is controlled by a heater control circuit (82) through a phase control circuit, preferably employing a thyristor, with an input to the heater control circuit (82) fed from a continuously variable resistor (80) in response to the deflection of the diaphragm pressure sensor (52) reflecting the internal gas pressure of the gas container (36).

10. Gas engine as claimed in claim 9, **characterised in that** said heater current is supplied from a starter motor operated as generator (12) driven through the engine (10) during ordinary gas engine running.

11. Gas engine as claimed in claim 1, **characterised in that** heating means (90) comprises a warmed air manifold, especially a shroud (94), utilising the latent heat of the gas engine (10), the flow of heated air towards the gas container (36) being controlled by a baffle means (96) pivotably supported at said manifold (94) to control an outlet opening thereof in response to the internal gas pressure of the gas container (36) as detected by the diaphragm pressure sensor (52) linked with said valve flap (96) via a linkage.

12. Gas engine as claimed in claim 11, **characterised by** an air circulating means, such as a fan (92) forcibly directing warmed air from the ambience of the engine (10) through the shroud (94) towards the baffle means (96) leading to the gas container (36).

13. Gas engine, in particular liquid-cooled 2-cycle engine, including a generator-starter coupled to the engine, as claimed in at least one of the preceding claims 1 to 12, **characterized by**
a gas container (36) containing liquefied pressurised gas
a receptacle (40) incorporating a gas pressure regulator (41) and a fuel cock (42) providing fluid connection in between the outlet of the gas container (36) and an intake pipe of the engine (10) via an electromagnetic valve (44) to supply fuel from the gas container (36) to the engine (10),
an oil tank (46), preferably a cartridge type oil tank, containing lubricating oil to be supplied to the intake pipe of the engine (10) via another receptacle (50) and an oil pump (25),
a liquid cooling circuit associated with the cylinder block including the cylinder head of the engine, comprising a radiator (14) integrated with an electric cooling fan (16), a coolant pressure regulator (20) made of a resilient material in order to elastically balance the volumetric change of the coolant volume depending on its temperature change, and a coolant pump (18) driven by the engine (10) to circulate the coolant through the cooling circuit,
wherein said gas pressure regulator (41) provided in conjunction with said receptacle (40) of the container (36) comprises a gas chamber (41a), an atmospheric chamber (41b), a diaphragm (41c) partitioning both said aforementioned chambers (41a, 41b), a spring (41d) to urge the diaphragm (41c) towards the gas chamber (41a) and a control lever (41e) for limiting gas inflow from the gas container (36) in conjunction with the related diaphragm (41c),
said gas pressure detecting means (52) comprising a housing and a related diaphragm pressure sensor (52) partitioning a gas chamber (52a) and an atmospheric chamber (52b) from each other, with the gas chamber (52a) being subject to the gas pressure introduced from the gas container (36), a spring (52c) biasing the diaphragm (52) against a counterforce resulting from the gas pressure prevailing in the gas chamber (52a), and a heating means activating member, wherein said electrical heater (54) associated to the gas container (36), preferably to cover the lower half thereof, is activated in response to a movement of the diaphragm (52) towards the gas chamber (52a), when the internal pressure of the gas container (36) drops on or below a preset pressure value.

14. Gas engine arrangement as claimed in claim 13, **characterised in that** the current flowing through the electric heater (54) is controlled either by a switch means (56) or by continuously controlling the phase of the current flowing permanently.

15. Gas engine arrangement as claimed in claim 13, **characterised by:**
a box-shaped case (22) receiving the radiator (14) on the right of the vertically disposed battery (24), a coolant pump (18), a coolant pressure regulator (20), an electromotive lubricating oil pump (25), with the radiator (14) sucking ambient air into the case (22) through an opening (26) on the right side of the case (22),
whereas the engine (10) and the generator (12) are disposed on the left of the battery (24), a muffler (28) near the left side of the case (22) in order to discharge the exhaust gas of the engine (10) through an opening (30) of the case (22),
having the engine (10), the generator (12) and the muffler (26) surrounded by an air guide wall (32) to guide the air sucked by the fan (16) of the radiator (14), said sucked air passing around the generator (12), engine (10) and muffler (26) prior to being exhausted through the opening (30),
the gas container (36) being loaded after opening a cap (38), positioned on the left side of the case (22) with the tip of the gas container (36) being connected to the receptacle (40) after loading of the gas container (36), said receptacle (40) being integral with a gas pressure regulator (41) and a fuel cock (42) as well as being associated with the gas pressure detecting diaphragm (52) adapted to operate the electrical heater (54) assembled in conjunction with said gas container (36), the fuel being supplied into the intake pipe of the engine (10) through an electromagnetic valve (44) after having passed through said receptacle (40),
a cartridge type lubricating oil tank (46), loaded after opening a cap (48) positioned on the right side of the case (22) to be connected to another receptacle (50) after loading to supply lubricating oil from said other receptacle (50) through an oil pump (25) to the intake pipe of the engine (10),
an operating switch (72) on the top surface of the case (22) to connect the electric source, and
a start switch (74) to start the engine (10) by means of the generator (12).

16. Gas engine as claimed in at least one of the preceding claims 1 to 15, **characterised by** a switching valve means (98) adapted either to establish direct fluid communication between a receptacle (40), forming the gas exapansion chamber and associated to the gas container (36), and the engine (10) via a check valve (100) bridging said gas pressure regulator (41), thus improving the cold start capabilities of the engine (10) with the gas pressure being simultaneously supplied to the atmospheric chamber (41b) of the gas pressure regulator (41), or to establish ordinary fluid communication between said receptacle (40) and the engine (10) through the gas pressure regulator (41), the atmospheric chamber (41b) of which being vented to the atmosphere, and a solenoid valve (44) during normal engine running subsequent to the starting phase of the engine (10).

17. Gas engine as claimed in claim 16, **characterised in that** a fluid operated diaphragm pressure sensor (52) is adapted to control a heating means (90) in response to the sensed gas pressure of the container (36), said heating means (90) utilising the heat of the engine (10), comprising a fan (92) fixed on a crankshaft of the engine (10) to forcibly circulate heated air surrounding the engine (10) towards the gas container (36) through a shroud (94) having a baffle (96) for controlling the flow of heated air towards the gas container (36), said baffle (96) regulating the downstream outlet opening of the shroud (94) through pivoting said baffle (96) by the diaphragm pressure sensor (52) in response to varying internal gas pressure of the gas container (36) sensed by said gas pressure detecting diaphragm (52).

## Patentansprüche

1. Gasmotor mit einer Kraftstoffzuführungseinheit, die mit diesem verbunden ist und einen Gasbehälter (36) enthält, der mit verflüssigtem Druckgas gefüllt ist, welches bei der Abgabe aus dem Gasbehälter (36) verdampft, um zu dem Gasmotor zugeführt zu werden, mit einer Erfassungseinrichtung, die betrieblich mit einer Gasdruckeinstelleinrichtung (54) verbunden ist, die ihrerseits dem Gasbehälter (36) zugeordnet ist, **dadurch gekennzeichnet,** daß eine Gasdruck-Erfassungeinrichtung (52) vorgesehen ist, um den Gasdruck in dem Gasbehälter (36) zu erfassen und eine Behälterheizeinrichtung (54, 90) in Abhängigkeit davon zu aktivieren, daß der erfaßte Gasdruck niedriger ist, als ein vorgegebener Wert, wobei die Gasdruck-Erfassungseinrichtung einen Membran-Drucksensor (52) aufweist, der eine Gasdruckkammer (42a) und eine Atmosphärendruckkammer (52b) begrenzt, wobei die Gasdruckkammer (52a) dem Gasdruck des Gasbehälters (36) durch eine Leitung ausgesetzt ist, die die Gasdruckkammer (52a) mit einem Aufnahmegefäß (40) verbindet, das eine Gasausdehnungskammer (40) bildet, angeordnet stromab eines Mundstückes des Gasbehälters (36), wobei der Membran-Drucksensor (52) eine Schalterbetätigungseinrichtung lagert, um die Behälterheizeinrichtung (54, 90) in Abhängigkeit von einer Durchbiegung der Membran (52), die einen Innendruckabfall in dem Gasbehälter (36) wiederspiegelt, zu betätigen.

2. Gasmotor nach Anspruch 1, **dadurch gekennzeichnet,** daß der Membran-Drucksensor (52) parallel zu einem Gasdruckregulierer (51) angeordnet ist, mit einer Fluidleitung, die eine Gasdruckkammer (52a) der Membrankammer mit dem Aufnahmegefäß (40) verbindet, in die sich das verflüssigte Druckgas beim Verlassen des Gasbehälters (36) ausdehnt.

3. Gasmotor nach Anspruch 1 oder 2, **dadurch gekennzeichnet,** daß die Heizeinrichtung eine elektrische Rohr- oder Plattenheizvorrichtung (54) oder ein elektrischer Patronenheizer ist, der in einen bogenförmigen Querschnitt geformt ist, um die untere Hälfte des Gasbehälters (36) zu bedecken.

4. Gasmotor nach Anspruch 3, **dadurch gekennzeichnet,** daß die bogenförmige elektrische Heizvorrichtung (54) die untere Hälfte des Gasbehälters (36) unter Belassung eines Spaltes zu diesem bedeckt.

5. Gasmotor nach Anspruch 4, **dadurch gekennzeichnet,** daß der Spalt mit einem wärmeleitfänigen Material gefüllt ist, das einen hohen, verbesserten Wärmeübergang von der Heizvorrichtung (54) auf den Gasbehälter (36) bewirkt.

6. Gasmotor nach zumindest einem der vorhergehenden Ansprüche 1 bis 5, **dadurch gekennzeichnet,** daß die Heizeinrichtung (54) wirksam ist, um den Gasbehälter (36) zu lagern.

7. Gasmotor nach zumindest einem der vorhergehenden Ansprüche 1 bis 6, **dadurch gekennzeichnet,** daß die Heizeinrichtung (54) durch einen elektrischen Strom aktivierbar ist, der von einer Energiequelle, wie z.B. einer Batterie (24), geliefert wird, die mit der Heizeinrichtung (54) über eine Schaltereinrichtung (56), betätigt durch den Membran-Drucksensor (52) mittels der Schalterbetätigungsvorrichtung des Membran-Drucksensors (52) betätigt wird.

8. Gasmotor nach Anspruch 7, **dadurch gekennzeichnet,** daß die Schalterbetätigungseinrichtung einen Stab aufweist, der in Eingriff ist mit einem schwenkbaren Kontakthebel, der vorgesehen ist, um einen elektrischen Stromkreis zu schließen, welcher die elektrische Heizeinrichtung (54) enthält.

9. Gasmotor nach zumindest einem der Ansprüche 1 bis 6, **dadurch gekennzeichnet,** daß die Heizeinrichtung (54) durch einen kontinuierlich gesteuerten elektrischen Strom aktiviert wird, der von der Energiequelle, wie z.B. einem Heizquellenstromkreis (54), der den Heizstrom zuführt, gespeist wird, wobei die Phase des Heizstromes durch einen Heizungs-Steuerschaltkreis (82) durch eine Phasensteuerschaltung, vorzugsweise unter Verwendung eines Thyristors, gesteuert wird, wobei eine Eingabe in den Heizungssteuerschaltkreis (82) von einem kontinuierlich veränderlichen Widerstand (80) in Abhängigkeit von der Durchbiegung des Membran-Drucksensors (52) gesteuert wird, die den Gasinnendruck des Gasbehälters (36) wiederspiegelt.

10. Gasmotor nach Anspruch 9, **dadurch gekennzeichnet,** daß der Heizstrom von einem Startermotor geliefert wird, der als Generator (12) während des gewöhnlichen Gasmotorbetriebes betrieben und durch den Motor (10) angetrieben wird.

11. Gasmotor nach Anspruch 1, **dadurch gekennzeichnet,** daß die Heizeinrichtung (90) einen Warmluftverteiler, insbesondere eine Verkleidung (94) aufweist, der die latente Wärme des Gasmotors (10) nutzt, wobei die Strömung erwärmter Luft zu dem Gasbehälter (36) hin durch eine Pralleinrichtung (96) gesteuert wird, welche schwenkbar an dem Verteiler (94) gelagert ist, um eine Auslaßöffnung desselben in Abhängigkeit von dem Gasinnendruck in dem Gasbehälter (36) zu steuern, wie er durch den Membran-Drucksensor (52), der mit der Ventilklappe (96) über ein Verbindungsgestänge verbunden ist, erfaßt wird.

12. Gasmotor nach Anspruch 11, **gekennzeichnet durch** eine Luftzirkulierungseinrichtung, wie z.B. ein Lüfterrad (92), das zwangsweise erwärmte Luft von der Umgebung des Motors (10) durch die Verkleidung (94) in Richtung zu der Pralleinrichtung (96) hin richtet, die zu dem Gasbehälter (36) führt.

13. Gasmotor, insbesondere flüssigkeitsgekühlter Zweitaktmotor, mit einem Generator-Starter, der mit dem Motor gekuppelt ist, nach zumindest einem der vorhergehenden Ansprüche 1 bis 12, **gekennzeichnet durch**
- einen Gasbehälter (36), der verflüssigtes Druckgas enthält,
- ein Aufnanmegefäß (40), welches einen Gasdruckregler (41) und einen Kraftstoff-Absperrhahn (42) enthält, der eine Fluidverbindung zwischen dem Auslaß des Gasbehälters (36) und einem Ansaugrohr des Motors (10) über ein Elektromagnetventil (44) herstellt, um Kraftstoff von dem Gasbehälter (36) zu dem Motor (10) zu liefern,
- einen Öltank (46), vorzugsweise einen Öltank vom Patronentyp, der Schmieröl enthält, das zu dem Ansaugrohr des Motors (10) über ein weiteres Aufnahmegefäß (50) und eine Ölpumpe (25) zugeführt werden soll,
- einen Flüssigkeitskühlkreislauf, verbunden mit dem Zylinderblock eineschließlich des Zylinderkopfes des Motors, mit einem Radiator (14), der mit einem elektrischen Kühllufterrad (16) integriert ist, einem Kühlmittel-Druckregler (20), der aus elastischem Material besteht, um elastisch die volumetrische Änderung des Kühlmittelvolumens in Abhängigkeit von seiner Temperaturänderung auszugleichen, und mit einer Kühlmittelpumpe (18), die durch den Motor (10) angetrieben wird, um das Kühlmittel durch den Künlkreislauf umzuwälzen,
- wobei der Gasdruckregler (41), vorgesehen in Verbindung mit dem Aufnahmegefäß (40) des Behälters (36) eine Gaskammer (41a), eine Atmosphärenkammer (41b), eine Membran (41c), die die beiden vorerwähnten Kammern (41a, 41b) trennt, eine Feder (41d), um die Membran (41c) in Richtung zu der Gaskammer (41a) hin vorzuspannen und einen Steuerhebel (41e) enthält, um die Gaseinströmung von dem Gasbehälter (36) in Verbindung mit der zugehörigen Membran (41c) zu begrenzen,
- wobei die Gasdruck-Erfassungseinrichtung (52) ein Gehäuse und einen zugehörigen Membran-Drucksensor (52) aufweist, der eine Gaskammer (52a) und eine Atmosphärenkammer (52b) voneinander trennt, wobei die Gaskammer (52a) dem Gasdruck, der von dem Gasbehälter (36) her eingeführt wird, ausgesetzt ist, mit einer Feder (52c), die die Membran (52) entgegen einer Gegenkraft vorspannt, welche aus dem Gasdruck resultiert, der in der Gaskammer (52a) herrscht, und mit einem die Heizeinrichtung aktivierenden Teil, wobei die elektrische Heizeinrichtung (54), die mit dem Gasbehälter (36) verbunden ist, vorzugsweise um die untere Hälfte desselben abzudecken, in Abhängigkeit von einer Bewegung der Membran (52) in Richtung zu der Gaskammer (52a) hin betätigt wird, wenn der Innendruck des Gasbehälters (36) auf oder unter einen vorgegebenen Druckwert abfällt.

14. Gasmotoranordnung nach Anspruch 13, **dadurch gekennzeichnet,** daß der Stromfluß durch die elektrische Heizeinrichtung (54) entweder durch eine Schaltereinrichtung (56) oder durch kontinuierliche Steuerung der Phase des permanent fließenden Stromes gesteuert wird.

15. Gasmotoranordnung nach Anspruch 13, **gekennzeichnet durch:**
- ein kastenförmiges Gehäuse (52), das den Radiator (14) rechts der vertikal angeordneten Batterie (24) aufnimmt, ferner aufnimmt eine Kühlmittelpumpe (18), einen Kühlmitteldruckregler (20), eine elektromotorische Schmierölpumpe (25), wobei der Radiator (14) Umgebungsluft in das Gehäuse (22) durch eine Öffnung (26) an der rechten Seite des Gehäuses (22) ansaugt,
- wobei der Motor (10) und der Generator (12) links der Batterie (24) angeordnet sind, mit einem Auspuffkörper (28) nahe der linken Seite des Gehäuses (12) um das Abgas von dem Motor (10) durch eine Öffnung (30) des Gehäuses (22) abzuführen,
- wobei der Motor (10), der Generator (12) und der Auspuffkörper (26) durch eine Luftführungswand (32) umgeben sind, um die Luft, die durch das Lüfterrad (16) des Radiators (14) angesaugt wurde, zu führen, wobei die angesaugte Luft rund um den Generator (12), den Motor (10) und den Auspuffkörper (26) strömt, bevor sie durch die Öffnung (30) abgeführt wird,
- wobei der Gasbehälter (36) eingesetzt wird, nachdem eine Kappe (38) geöffnet worden ist, die an der linken Seite des Gehäuses (22) angeordnet ist, wobei die Spitze des Gasbehälters (36) mit dem Aufnahmegefäß (40) verbunden wird, nachdem der Gasbehälter (36) eingesetzt worden ist, wobei das Aufnahmegefäß (40) einstückig mit einem Gasdruckregler (41) und einem Kraftstoffabsperrhahn (42) ausgebildet ist sowie mit der Gasdruck-Erfassungsmembran (52) verbunden ist, die vorgesehen ist, um die elektrische Heizeinrichtung (54) zu betätigen, die in Verbindung mit dem Gasbehälter (36) angeordnet ist, wobei der Kraftstoff in das Ansaugrohr des Motors (10) durch ein Elektromagnetventil (44) nach Durchgang durch das Aufnahmegefäß (40) zugeführt wird,
- einen Schmieröltank (46) vom Patronentyp, eingesetzt nach Öffnen einer Kappe (48), die an der rechten Seite des Gehäuses (22) angeordnet ist, um mit einem weiteren Aufnahmegefäß (50) nach dem Einsetzen verbunden zu werden, um Schmieröl von dem weiteren Aufnahmegefäß (50) durch eine Ölpumpe (25) zu dem Ansaugrohr des Motors (10) zuzuführen,
- einen Betätigungsschalter (72) an der Oberseite des Gehäuses (22), um die elektrische Energiequelle zu verbinden, und
- einen Starterschalter (74), um den Motor (10) durch den Generator (12) zu starten.

16. Gasmotor nach zumindest einem der vorhergehenden Ansprüche 1 bis 15, **gekennzeichnet durch** eine umschaltende Ventileinrichtung (98), die vorgesehen ist, um entweder eine direkte Fluidverbindung zwischen einem Aufnahmegefäß (14), das die Gasausdehnungskammer bildet und mit dem Gasbehälter (36) verbunden ist, und dem Motor (10) über ein Rückschlagventil (100), das den Gasdruckregler (41) überbrückt und so die Kaltstartfähigkeiten des Motors (10) verbessert, wobei der Gasdruck gleichzeitig an die Atmosphärenkammer (41b) des Gasdruckreglers (41) gelegt wird, herzustellen, oder um eine gewöhnliche Fluidverbindung zwischen dem Aufnahmegefäß (40) und dem Motor (10) durch den Gasdruckregler (41), dessen Atmosphärenkammer (41b) zur Atmosphäre hin entlastet ist, und einem Magnetspulenventil (44) während des normalen Motorlaufes im Anschluß an die Startphase des Motors (10) herzustellen.

17. Gasmotor nach Anspruch 16, **dadurch gekennzeichnet,** daß ein fluidbetätigter Membran-Drucksensor (52) vorgesehen ist, um eine Heizeinrichtung (90) in Abhängigkeit von dem erfaßten Gasdruck in den Behältern (36) zu steuern, wobei die Heizeinrichtung (90), die die Wärme des Motors (10) verwendet, ein Lüfterrad (92) aufweist, das auf einer Kurbelwelle des Motors (10) befestigt ist, um zwangsweise erwärmte Luft, die den Motor (10) umgibt, in Richtung zu dem Gasbehälter (36) hin durch eine Verkleidung (94) zu zirkulieren, die einen Prallkörper (96) zur Steuerung der Strömung der erwärmten Luft in Richtung zu den Gasbehältern (36) aufweist, wobei der Prallkörper (96) die stromabseitige Auslaßöffnung der Verkleidung (84) durch Verschwenkung des Prallkörpers (96) durch den Membran-Drucksensor in Abhängigkeit von einem sich ändernden Gasinnendruck des Gasbehälters (36) regelt, der durch die Gasdruck-Erfassungsmembran (52) erfaßt wurde.

## Revendications

1. Moteur à gaz comportant un ensemble d'alimentation en carburant lui étant associé, comprenant un récipient de gaz (36) rempli d'un gaz comprimé liquéfié s'évaporant à l'évacuation du récipient de gaz (36), en vue d'être amené au moteur à gaz (14), présentant un moyen de mesure relié en fonctionnement à un moyen d'ajustement de pression de gaz (54) associé audit récipient de gaz (36), caractérisé en ce qu'un moyen de mesure de pression de gaz (52) est prévu pour mesurer la pression de gaz régnant dans ledit récipient de gaz (36), pour actionner un moyen de chauffage de récipient (54, 90) en réponse à la pression de gaz mesurée comme étant inférieure à une valeur prédéterminée, ledit moyen de mesure de pression de gaz comprend un capteur de pression à diaphragme (52) définissant une chambre de pression de gaz (52a) et une chambre de pression atmosphérique (52b), ladite chambre de pression de gaz (52a) étant soumise à la pression de gaz du récipient de gaz (36), par un conduit mettant en communication ladite chambre de pression de gaz avec un logement (40) formant une chambre d'expansion de gaz (40), disposée en aval d'une pièce d'embouchure du récipient de gaz (36), tandis que ledit capteur de pression à diaphragme (52) supporte un moyen de mise en oeuvre de commutation, pour mettre en fonctionnement ledit moyen de chauffage de récipient (54, 90) en réponse à une déviation du diaphragme (52) reflétant une chute de pression dans le récipient de gaz (36).

2. Moteur à gaz selon la revendication 1, caractérisé en ce que ledit capteur de pression à diaphragme (52) est disposé parallèlement à un régulateur de pression de gaz (41), une conduite de fluide communiquant de façon hydraulique avec une chambre de pression de gaz (52a) de ladite chambre à diaphragme pourvue du logement (40), dans laquelle le gaz comprimé liquide se dilate en quittant le récipient de gaz (36).

3. Moteur à gaz selon la revendication 1 ou 2, caractérisé en ce que ledit moyen de chauffage est un élément de chauffage électrique (54) tubulaire ou plat ou une cartouche chauffante électrique, doté d'une section transversale de forme arquée, pour recouvrir la moitié inférieure du récipient de gaz (36).

4. Moteur à gaz selon la revendication 3, caractérisé en ce que ledit élément de chauffage électrique arqué (54) recouvre la moitié inférieure du récipient de gaz (6), en laissant un espace entre eux.

5. Moteur à gaz selon la revendication 4, caractérisé en ce que ledit espace est rempli d'un matériau thermoconducteur produisant un transfert de chaleur hautement amélioré, de l'élément de chauffage (54) au récipient de gaz (36).

6. Moteur à gaz selon au moins l'une des revendications 1 à 5 précédentes, caractérisé en ce que ledit moyen de chauffage (54) est efficace pour supporter ledit récipient de gaz (36).

7. Moteur à gaz selon au moins l'une des revendications 1 à 6 précédentes, caractérisé en ce que ledit moyen de chauffage (54) peut être actionné par un courant électrique fourni par une source d'énergie, telle qu'une pile (24) reliée au moyen de chauffage (54), via un moyen de commutation (56) actionné par ledit capteur de pression à diaphragme (52), par l'intermédiaire du mécanisme de mise en oeuvre de commutation du capteur de pression à diaphragme (52).

8. Moteur à gaz selon la revendication 7, caractérisé en ce que ledit moyen de mise en oeuvre de commutation comprend une tige venant au contact d'un levier de contact pivotant, adapté pour fermer un circuit électrique contenant ledit élément de chauffage électrique (54).

9. Moteur à gaz selon au moins l'une des revendications 1 à 6, caractérisé en ce que ledit moyen de chauffage (54) est actionné par un courant électrique contrôlé de façon continue, fourni par une source d'énergie, telle qu'un circuit de source d'élément de chauffage (84) fournissant ledit courant d'élément de chauffage, dont la phase est commandée par un circuit de commande d'élément de chauffage (82) par l'intermédiaire d'un circuit de commande de phase, utilisant de préférence un thyristor, un signal d'entrée étant amené au circuit de commande d'élément de chauffage (82), par une résistance à variation continue (80), en réponse à la déviation du capteur de pression à diaphragme (52) reflétant la pression de gaz interne du récipient de gaz (36).

10. Moteur à gaz selon la revendication 9, caractérisé en ce que ledit courant d'élément de chauffage est fourni par un moteur de démarreur actionné comme un générateur (12), entrainé par le moteur (10) durant le fonctionnement classique du moteur à gaz.

11. Moteur à gaz selon la revendication 1, caractérisé en ce que le moyen de chauffage (90) comprend un collecteur d'air chauffé, spécialement une enveloppe (94), utilisant la chaleur latente du moteur à gaz (10), l'écoulement d'air chauffé vers le récipient de gaz (36) étant commandé par un moyen de déviation (96) monté pivotant sur ledit collecteur (94), pour commander son ouverture de sortie en réponse à la pression de gaz interne du récipient de gaz (36), telle que mesurée par le capteur de pression à diaphragme (52) relié audit volet de soupape (96) via une liaison.

12. Moteur à gaz selon la revendication 11, caractérisé par un moyen de circulation d'air, tel qu'un ventilateur (92) orientant de façon forcée l'air chauffé provenant de l'air ambiant du moteur (10), à travers l'enveloppe (94), vers le moyen de déviation (96) menant au récipient de gaz (36).

13. Moteur à gaz, en particulier un moteur à deux temps et à refroidissement liquide, comprenant un générateur-démarreur couplé au moteur, selon au moins l'une des revendications 1 à 12 précédentes, caractérisé par :
un récipient de gaz (36) contenant du gaz comprimé liquide,
un logement (40) incorporant un régulateur de pression de gaz (41) et un robinet de carburant (42) établissant une liaison hydraulique entre la sortie du récipient de gaz (36) et un tuyau d'admission du moteur (10), via une soupape électromagnétique (44), pour fournir du carburant depuis le récipient de gaz (36) au moteur (10),
un réservoir d'huile (46), de préférence un réservoir d'huile de type à cartouche, contenant de l'huile lubrifiante à fournir au tuyau d'admission du moteur (10), via un autre logement (50) et une pompe à huile (25),
un circuit de refroidissement liquide associé au bloc-cylindres comportant la culasse du moteur, comprenant un radiateur (14) intégré à un ventilateur de refroidissement électrique (16), un régulateur de pression d'agent refroidissant (20) réalisé en matériau élastique, en vue d'équilibrer élastiquement le changement de volumes du volume d'agent refroidissant en fonction de son changement de température et une pompe d'agent refroidissant (18) entraînée par le moteur (10), pour faire circuler l'agent refroidissant dans le circuit de refroidissement,
dans lequel ledit régulateur de pression de gaz (41) prévu conjointement audit logement (40) du récipient (36) comprend une chambre de gaz (41a), une chambre atmosphérique (41b), un diaphragme (41c) séparant lesdites deux chambres (41a, 41b) précitées, un ressort (41d) pour pousser le diaphragme (41c) vers la chambre de gaz (41a) et un levier de commande (41e), pour limiter l'écoulement d'admission de gaz provenant du récipient de gaz (36) associé au diaphragme (41c) correspondant,
ledit moyen de mesure de pression de gaz (52) comprenant un boitier et un capteur à diaphragme (52) correspondant, séparant une chambre de gaz (52a) et une chambre atmosphérique (52b) l'une de l'autre, la chambre de gaz (52a) étant soumise à la pression de gaz introduite par le récipient de gaz (36), un ressort (52c) déplaçant élastiquement le diaphragme (52) contre une force opposée, résultant de la pression de gaz régnant dans la chambre de gaz (52a) et un organe d'actionnement de moyen de chauffage, dans lequel ledit élément de chauffage électrique (54) associé au récipient de gaz (36), de préférence pour recouvrir sa moitié inférieure, est actionné en réponse à un déplacement du diaphragme (52) vers la chambre de gaz (52a), lorsque la pression interne du récipient de gaz (36) chute ou présente une valeur inférieure à une valeur de pression prédéterminée.

14. Agencement de moteur à gaz selon la revendication 13, caractérisé en ce que le courant s'écoulant dans l'élément de chauffage électrique (54) est commandé soit par un moyen de commutation (56), soit en commandant de façon continue la phase du courant s'écoulant en permanence.

15. Agencement de moteur à gaz selon la revendication 13, caractérisé par :
un carter en forme de boitier (22) logeant le radiateur (14) à droite de la pile (24) disposée verticalement, une pompe d'agent refroidissant (18), un régulateur de pression d'agent refroidissant (20), une pompe à huile lubrifiante (25) électromotrice, le radiateur (14) introduisant de l'air ambiant dans le carter (22), par l'intermédiaire d'une ouverture (26) située sur le côté droit du carter (22),
tandis que le moteur (10) et le générateur (12) sont disposés à gauche de la pile (24), un silencieux (28) étant situé à proximité du côté gauche du carter (22), en vue d'évacuer les gaz d'échappement du moteur (10) par l'intermédiaire d'une ouverture (30) du carter (22),
présentant le moteur (10), le générateur (12) et le silencieux (26) entourés par une paroi de guidage d'air (32), pour guider l'air aspiré par le ventilateur (16) du radiateur (14), ledit air aspiré passant autour du générateur (12), du moteur (10) et du silencieux (26), avant de s'échapper par l'ouverture (30),
le récipient de gaz (36) étant chargé après avoir ouvert un capuchon (38), disposé sur le côté gauche du carter (22), l'extrémité du récipient de gaz (36) étant reliée au logement (40) après avoir chargé le récipient de gaz (36), ledit logement (40) étant réalisé d'un seul tenant avec un régulateur de pression de gaz (41) et un robinet de carburant (42) et associé au diaphragme de mesure de pression de gaz (52), adapté pour actionner l'élément de chauffage électrique (54) associé audit récipient de gaz (36), le carburant étant amené dans le tuyau d'admission du moteur (10), par l'intermédiaire d'une soupape électromagnétique (44), après être traversé ledit logement (40),
un réservoir d'huile lubrifiante (46) de type à cartouche, chargé après avoir ouvert un capuchon (48) disposé sur le côté droit du carter (22), destiné à être relié à un autre logement (50) après le chargement, pour amener de l'huile lubrifiante depuis ledit autre logement (50), par l'intermédiaire d'une pompe à huile (25), au tuyau d'admission du moteur (10),
un commutateur d'actionnement (72) situé sur la surface supérieure du carter (22), pour être relié à la source électrique, et
un commutateur de démarrage (74) pour démarrer le moteur (10) au moyen du générateur (12).

16. Moteur à gaz selon au moins l'une des revendications 1 à 15 précédentes, caractérisé par un moyen formant soupape de commutation (98), adapté soit pour établir une communication hydraulique directe entre un logement (40), formant la chambre d'expansion de gaz et associé au récipient de gaz (36), et le moteur (10), via un clapet de non-retour (100) effectuant un pontage sur ledit régulateur de pression de gaz (41), en améliorant ainsi les capacités de démarrage à froid du moteur (10), la pression de gaz étant fournie simultanément à la chambre atmosphérique (41b) du régulateur de pression de gaz (41), soit pour établir une communication hydraulique classique entre ledit logement (40) et le moteur (10), par l'intermédiaire du régulateur de pression de gaz (41), dont la chambre atmosphérique (41b) est évacuée vers l'atmosphère et d'une électrovanne (44), durant le fonctionnement de moteur normal à la suite de la phase de démarrage du moteur (10).

17. Moteur à gaz selon la revendication 16, caractérisé en ce qu'un capteur de pression à diaphragme (52) actionné hydrauliquement est adapté pour commander un moyen de chauffage (90) en réponse à la pression de gaz mesurée du récipient (36), ledit moyen de chauffage (90) utilisant la chaleur du moteur (10), comprenant un ventilateur (92) fixé au vilebrequin du moteur (10) pour faire circuler de façon forcée de l'air chauffé entourant le moteur (10), vers le récipient de gaz (36), par l'intermédiaire d'une enveloppe (94) présentant un déflecteur (96) pour commander l'écoulement d'air chauffé vers le récipient de gaz (36), ledit déflecteur (96) réglant l'ouverture de sortie aval de l'enveloppe (94) en faisant pivoter ledit déflecteur (96) par le capteur de pression à diaphragme (52), en réponse à une variation de pression de gaz interne du récipient de gaz (36), mesurée par ledit diaphragme de mesure de pression de gaz (52).
